# EUROPEAN PATENT SPECIFICATION

(11) **EP 2 743 308 B1**
(45) Date of publication and mention of the grant of the patent: **26.10.2016**
(21) Application number: 12879145.6
(22) Date of filing: 10.09.2012
(51) Int. Cl.: C08L 25/06, C08L 25/12, C09K 21/12, C08K 5/51, C08L 63/00, C08L 51/04, C08L 55/02

(54) **FLAME RETARDANT AND FLAME RETARDANT COMPOSITION FOR STYRENE RESINS**
FLAMMSCHUTZMITTEL UND FLAMMWIDRIGE ZUSAMMENSETZUNG FÜR STYROLHARZE
RETARDATEUR DE FLAMME ET COMPOSITION RETARDATRICE DE FLAMME POUR DES RÉSINES STYRÈNE

(30) Priority: 04.09.2012 KR 20120097417
(43) Date of publication of application: 18.06.2014
(73) Proprietor: LG Chem, Ltd., Seoul 150-721 (KR)
(72) Inventor: JANG, Min Sul, Daejeon 305-738 (KR); NAM, Ki Young, Daejeon 305-738 (KR); YOO, Je Sun, Daejeon 305-738 (KR); HWANG, Yong Yeon, Daejeon 305-738 (KR); SIM, Jae Yong, Daejeon 305-738 (KR)
(74) Representative: Goddar, Heinz J.
(86) International application number: PCT/KR2012/007247
(87) International publication number: WO 2014/038738

(56) References cited:
- EP-A1- 2 505 607
- EP-B1- 1 312 644
- JP-A- 2002 201 330
- KR-A- 20030 027 299
- US-A1- 2004 034 127
- US-A1- 2006 160 931
- LEE, K. ET AL.: 'Studies on the thermal stabilization enhancement of ABS; synergistic effect by triphenyl phosphate and epoxy resin mixtures' POLYMER vol. 43, 2002, pages 2249 - 2253, XP004335727

## Description

### BACKGROUND OF THE INVENTION

### Field of the Invention

The present invention relates to a flame retardant for a styrene resin and a flame retardant composition comprising the same. More particularly, the present invention relates to a flame retardant for a styrene resin which comprises a non-halogen flame retardant compound and an epoxy resin having a repeat unit represented by Formula 1 and thus passes the IEC TS 62441 flame retardancy standard of external candle flame ignition without using the non-halogen flame retardant compound in an excessive amount, and a flame retardant composition comprising the same.

### Description of the Related Art

In general, an acrylonitrile-butadiene-styrene (hereinafter, referred to as ABS) resin is widely used as an exterior material of electric and electronic products and office machines and the like due to stiffness and chemical resistance of acrylonitrile, and processability and mechanical properties of butadiene and styrene. However, the ABS resin is inherently readily combustible and has almost no flame retardancy.

Due to these problems, the ABS resin used for electric and electronic products, office machines and the like should satisfy flame-retardancy standards in order to secure fire safety of electric and electronic products.

Methods for imparting flame retardancy to ABS resins include polymerization of rubber-modified styrene resins through incorporation of flame-retardant monomers during preparation of rubber-modified styrene resins, mixing a flame retardant and an auxiliary flame retardant for styrene resins with the prepared rubber-modified styrene resins and the like. Examples of the flame retardants for styrene resins include halogen flame retardants, and non-halogen flame retardants such as phosphorous, nitrogen and hydroxide flame retardants, and examples of the auxiliary flame retardant include antimony compounds, silicon compounds, zinc compounds and the like.

Halogen flame retardants for styrene resins exhibit high flame retardancy efficiency, as compared to non-halogen flame retardants for styrene resins, and exhibit superior mechanical properties comparable to rubber-modified styrene resins. For this reason, a method of imparting flame retardancy to ABS resins using halogen flame retardants for styrene resins is currently the most generally used. Of these, bromine-based flame retardants for styrene resins are particularly effective. However, when a bromine-based flame retardant for a styrene resin is added during processing of ABS resins, thermal stability is deteriorated and the flame retardant is decomposed due to high temperatures and pressures during the processing, thus causing generation of toxic corrosive gases and negatively affecting work environments and human health. This problem also occurs when the ABS resin processed by incorporating a bromine-based flame retardant combusts.

In an attempt to avoid this problem, a non-halogen flame retardant for a styrene resin is used and in particular, a non-halogen flame retardant compound is generally used. However, disadvantageously, the non-halogen flame retardant compound should be incorporated in an excessive amount due to low flame retardancy efficiency, as compared to halogen flame retardants for styrene resins. In addition, disadvantageously, thermoplastic resin compositions which do not produce char due to the principle of phosphorous-based flame retardant systems cannot sufficiently exert flame retardancy.

Meanwhile, there is a vertical combustion test method in accordance with UL94 as a flame retardant standard and a flame retardancy identification test method. This method is a standard to evaluate flame resistance to inner combustion caused by short circuit or the like of a circuit substrate present in a finished electric product. Meanwhile, an external candle flame ignition standard (related standard: IEC TS 62441) which is being standardized is a standard through which flame resistance of a final product is evaluated, when a candle as an exterior ignition source comes in contact with the product due to changes in exterior environments such as earthquakes.

The external candle flame ignition standard is utilized in a wider range of applications since subjects to which the standard is applied are all combustible materials and is more realistic since the standard presumes a case of flames of burning candles as fires which may be often generated in houses.

US 2004/034127 A1 discloses a flame-retardant epoxy resin composition containing a phenolic novolak type epoxy resin, a bisphenol-type epoxy resin not containing a halogen, an inorganic filler and an organic flame-retardant.

US 2006/0160931 A1 discloses a non-halogen flame-retardant epoxy resin composition, comprising (A) a silicon-containing, phosphorous-modified epoxy resin having an average epoxy equivalent of 300 to 1,500 and containing phosphorous in an amount of 2 to 5% by weight, (B) 20 to 100 parts by weight of a multifunctional epoxy resin, relative to the silicon-containing, phosphorous-modified epoxy resin, (C) 35 to 120% mixed curing agent of an amine curing agent and a phenolic curing agent, relative to the epoxy equivalent, and (D) 20 to 100 parts by weight of a metal hydrate inorganic flame-retardant, relative to the resin composition.

### SUMMARY OF THE INVENTION

In an attempt to solve the problems of related art, the present inventors completed the present invention, during continued research associated with a flame retardant which passes the IEC TS 62441 standard of external candle flame ignition in spite of not adding an excessive amount of non-halogen flame retardant compound to a variety of styrene resins such as acrylonitrile-butadiene-styrene (ABS) copolymers, styrene-acrylonitrile (SAN) copolymers, polystyrene (PS) copolymers, high-impact polystyrene (HIPS) copolymers and combinations thereof.

Therefore, it is one object of the present invention to provide a flame retardant which is based on a non-halogen flame retardant compound and imparts flame retardancy sufficient to pass the IEC TS 62441 standard of external candle flame ignition to a styrene resin.

It is another object of the present invention to provide a flame retardant composition comprising the flame retardant and a styrene resin as a base resin.

In accordance with an aspect of the present invention, the above and other objects can be accomplished by the provision of a flame retardant for a styrene resin comprising:
a non-halogen flame retardant compound; and
an epoxy resin having a repeat unit represented by the following Formula 1: 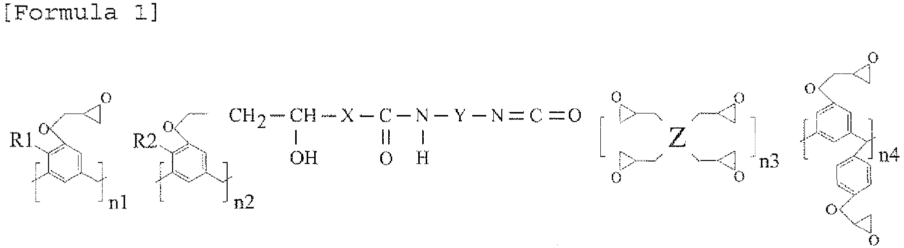
   wherein R1 and R2 each independently represent a hydrogen atom, C1-C20 alkyl, C5-C24 aryl or C6-C30 alkylaryl,
   X and Y each independently represent a hydrogen atom, unsubstituted or oxygen- or nitrogen-substituted C1-C20 alkyl, unsubstituted or oxygen- or nitrogen-substituted C5-C24 aryl, or unsubstituted or oxygen- or nitrogen-substituted C6-C30 alkylaryl,
   Z represents unsubstituted or oxygen- or nitrogen-substituted C1-C20 tertiary alkyl, unsubstituted or oxygen-or nitrogen-substituted C5-C24 tertiary aryl, or unsubstituted or oxygen- or nitrogen-substituted C6-C30 tertiary alkylaryl,
   n1, n2, n3, and n4 each independently represent an integer of 0 to 100, n1, n2, n3, and n4 cannot be zero at the same time, and
   wherein the epoxy resin is an epoxy resin of Formula 1 wherein n3 and n4 are 0 and n1 and n2 are each independently an integer of 1 to 100.

In accordance with another aspect of the present invention, provided is a flame retardant composition comprising 2 to 60 parts by weight of the flame retardant, based on 100 parts by weight of a styrene resin, wherein a content of an epoxy resin is 1 to 30 parts by weight.

Preferred embodiments are disclosed in the sub-claims.

### DETAILED DESCRIPTION OF THE INVENTION

Hereinafter, the present invention will be described in detail.

The present invention provides a flame retardant for a styrene resin comprising a non-halogen flame retardant compound and an epoxy resin having a repeat unit represented by the following Formula 1: 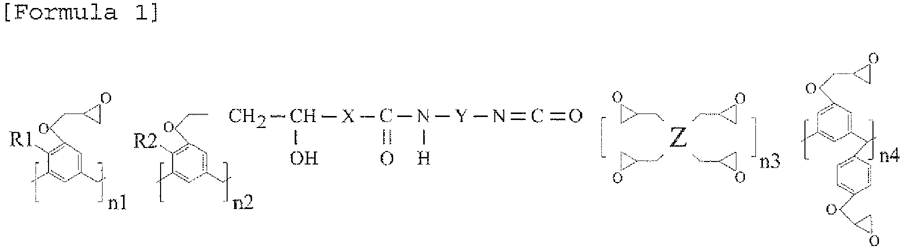
wherein R1 and R2 each independently represent a hydrogen atom, C1-C20 alkyle, C5-C24 aryl or C6-C30 alkylaryl,
X and Y each independently represent a hydrogen atom, unsubstituted or oxygen- or nitrogen-substituted C1-C20 alkyl, unsubstituted or oxygen- or nitrogen-substituted C5-C24 aryl, or unsubstituted or oxygen- or nitrogen-substituted C6-C30 alkylaryl,
Z represents unsubstituted or oxygen- or nitrogen-substituted C1-C20 tertiary alkyl, unsubstituted or oxygen-or nitrogen-substituted C5-C24 tertiary aryl, or unsubstituted or oxygen- or nitrogen-substituted C6-C30 tertiary alkylaryl,
n1, n2, n3, and n4 each independently represent an integer of 0 to 100, n1, n2, n3, and n4 cannot be zero at the same time, and
wherein the epoxy resin is an epoxy resin of formula 1 wherein n3 and n4 are 0 and n1 and n2 are each independently an integer of 1 to 100.

Furthermore, examples of the non-halogen flame retardant compound used in the present invention may include non-halogen flame retardant compounds such as phosphate compounds including triphenylphosphate, tricresylphosphate, tri(2,6-dimethylphenyl)phosphate, and tri(2,4,6-trimethylphenyl)phosphate, diphosphate compounds including tetraphenyl resorcinol diphosphate, tetracresyl resorcinol diphosphate, tetra(2,6-dimethylphenyl)resorcinol diphosphate, tetraphenyl bisphenol A diphosphate, polyphosphate compounds having three or more phosphate groups, phosphonate compounds, and phosphinate compounds. This compound may be used alone or in a combination thereof.

There is no limitation as to both end groups of the epoxy resin so long as they have an epoxy group while not affecting flame retardancy. For example, the end groups are

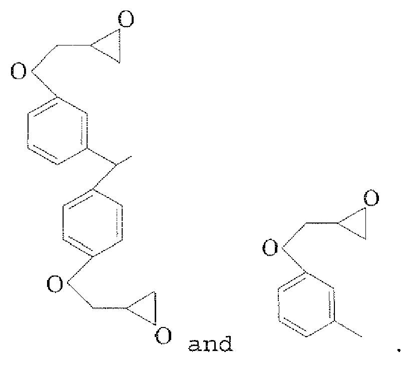

The epoxy resin is obtained through addition reaction of a compound having a urethane functional group with an epoxy ring of an epoxy resin and has a structure in which urethane-modified epoxy groups and non-urethane-modified epoxy groups coexist in one molecule. In this case, X and Y each independently represent a hydrogen atom, unsubstituted or oxygen- or nitrogen-substituted C1-C20 alkyl, unsubstituted or oxygen- or nitrogen-substituted C5-C24 aryl, or unsubstituted or oxygen- or nitrogen-substituted C6-C30 alkylaryl, with the proviso that they not affect flame retardancy.

All of the epoxy resins have compatibility with the base resin and have a structure enabling production of char when a processed thermoplastic resin combusts, thus satisfying the flame retardant standard of external candle flame ignition without using an excessive amount of non-halogen flame retardant compound.

According to the invention, a flame-retardant is preferably provided, wherein the epoxy resin comprises a combination of an epoxy resin of Formula 1 wherein n3 and n4 are 0, and n1 and n2 are each independently an integer of 1 to 100 and an epoxy resin selected from an epoxy resin of Formula 1 wherein n1, n2 and n3 are 0 and n4 is an integer of 1 to 100, a resin of Formula 1 wherein n1, n2 and n4 are 0 and n3 is 1, and a resin of Formula 1, wherein n1 is 1, R1 is -CH₃, and n2, n3 and n4 are 0, and a mix ratio of the two resins is determined such that a rate of each resin in the mix ratio ranges from 1 to 9.

According to the invention, a flame-retardant is preferably provided, wherein the epoxy resin comprises a combination of an epoxy resin of Formula 1 wherein n3 and n4 are 0, and n1 and n2 are each independently an integer of 1 to 100 and two epoxy resins selected from an epoxy resin of Formula 1 wherein n1, n2 and n3 are 0 and n4 is an integer of 1 to 100, a resin of Formula 1 wherein n1, n2 and n4 are 0, and n3 is 1, and a resin of Formula 1, wherein n1. is 1, R1 is -CH₃, and n2, n3 and n4 are 0, and a mix ratio of the three resins is determined such that a rate of each resin in the mix ratio ranges from 1 to 8.

According to the invention, a flame-retardant is preferably provided, wherein the epoxy resin comprises a combination of four resins comprising an epoxy resin of Formula 1 wherein n1, n2 and n3 are 0 and n4 is an integer of 1 to 100, an epoxy resin of Formula 1 wherein n3 and n4 are 0, and n1 and n2 are each independently an integer of 1 to 100, a resin of Formula 1 wherein n1, n2 and n4 are 0, and n3 is 1, and a resin of Formula 1, wherein n1 is 1, R1 is -CH₃, and n2, n3 and n4 are 0, and a mix ratio of the four resins is determined such that a rate of each resin in the mix ratio ranges from 1 to 7.

The flame retardant may be present in an amount of 2 to 60 parts by weight, based on 100 parts by weight of the styrene resin and a content of the epoxy resin may be 1 to 30 parts by weight. The reason behind this is that a thermoplastic resin composition prepared within this content range produces char and thus exhibits superior flame retardancy without using an excess of non-halogen flame retardant compound.

Consequently, the non-halogen flame retardant compound is preferably present in an amount of 1 to 30 parts by weight, based on 100 parts by weight of the styrene resin. The reason for this is that the thermoplastic resin composition prepared under the content conditions is effective in exhibiting superior flowability and gloss, without causing great deterioration in mechanical strength and thermal stability.

The styrene resin may be an acrylonitrile-butadiene-styrene (ABS) copolymer, a styrene-acrylonitrile (SAN) copolymer, a polystyrene (PS) copolymer, a high-impact polystyrene (HIPS) copolymer or a combination thereof. In particular, the styrene resin comprises 10 to 90% by weight of a rubber-reinforced ABS resin prepared by emulsion graft polymerization such that the ABS resin contains 50 to 70% by weight of a butadiene rubber, based on the total weight of the ABS resin, and 90 to 10% by weight of a SAN copolymer which has a weight average molecular weight of 50,000 to 150,000 and contains 20 to 40% by weight of an acrylonitrile monomer.

The composition may further comprise one or more additives selected from the group consisting of an impact resistance modifier, a heat stabilizer, an antidropping agent, an antioxidant, a photostabilizer, a UV blocker, a pigment and an inorganic filler in an amount of 0.1 to 50 parts by weight, with respect to 100 parts by weight of the styrene resin.

A method of preparing the flame retardant composition according to the present invention may include adding ingredients to an extruder, melt-mixing and extruding the ingredients at a barrel temperature of 230 to 250°C and further injection-molding the resulting mixture. The extruder is not particularly limited, but may be a twinscrew extruder.

Now, the present invention will be described in more detail with reference to the following Examples. These examples are only provided to illustrate the present invention and should not be construed as limiting the scope and spirit of the present invention.

### [Example 1] (not according to the invention)

10 parts by weight of an epoxy resin (first epoxy resin) shown in Table 1 below and 10 parts by weight of tetra(2,6-dimethylphenyl)resorcinol diphosphate (produced by Daiichi Kagaku Kogyo Co., Ltd., Japan under the trade name of PX-200) as a non-halogen flame retardant compound were added to 100 parts by weight of a base resin consisting of 25 parts by weight of an ABS copolymer (containing 55% by weight of a butadiene rubber) produced by LG Chem. Ltd. by emulsion graft polymerization using a butadiene rubber latex having an average particle size of 0.3 *µ*m and 75 parts by weight of a styrene-acrylonitrile copolymer containing 25% by weight of acrylonitrile and having a weight average molecular weight of 120,000, the resulting mixture was homogenized using a Hansel mixer and a thermoplastic resin composition was pelletized through a twin screw extruder.

The pelletized thermoplastic resin composition was subjected to injection molding to produce samples for flame retardancy testing having a width of 10 centimeters, a length of 10 centimeters and a thickness of 3 millimeters.

### [Example 2]

The same testing as in Example 1 was repeated except that an epoxy resin (second epoxy resin) shown in the following Table 1 was used instead of the epoxy resin in Example 1.

### [Example 3] (not according to the invention)

The same testing as in Example 1 was repeated except that an epoxy resin (third epoxy resin) shown in the following Table 1 was used instead of the epoxy resin in Example 1.

### [Example 4] (not according to the invention)

The same testing as in Example 1 was repeated except that 10 parts by weight of an o-cresol novolac epoxy resin (fourth epoxy resin), an epoxy resin of Formula 1, wherein n1 is 1 and n2, n3 and n4 are 0 was used instead of the epoxy resin in Example 1, and the non-halogen flame retardant compound was added in an amount of 10 parts by weight.

### [Example 5]

The same testing as in Example 1 was repeated except that first, second and third epoxy resins shown in the following Table 1 were used in a total amount of 10 parts by weight (weight ratio of 1:8:1), instead of the epoxy resin in Example 1.

### [Example 6]

The same testing as in Example 1 was repeated except that second and fourth epoxy resins shown in the following Table 1 were used in a total amount of 10 parts by weight (weight ratio of 5:5), instead of the epoxy resin in Example 1.

### [Example 7]

The same testing as in Example 1 was repeated except that second and fourth epoxy resins shown in the following Table 1 were used in a total amount of 10 parts by weight (weight ratio of 7:3), instead of the epoxy resin in Example 1.

### [Example 8]

The same testing as in Example 1 was repeated except that first, second and fourth epoxy resins shown in the following Table 1 were used in a total amount of 10 parts by weight (weight ratio of 8:1:1), instead of the epoxy resin in Example 1.

### [Example 9]

The same testing as in Example 1 was repeated except that first, second, third and fourth epoxy resins shown in the following Table 1 were used in a total amount of 10 parts by weight (weight ratio of 2.5:2.5:2.5:2.5), instead of the epoxy resin in Example 1.

### [Comparative Example 1]

The same testing as in Example 1 was repeated except that both the non-halogen flame retardant compound and the epoxy resin of Example 1 were not added.

### [Comparative Example 2]

The same testing as in Example 1 was repeated except that 20 parts by weight of an epoxy resin shown in the following Table 1 was added instead of the epoxy resin in Example 1 and the non-halogen flame retardant compound was not added.

### [Comparative Example 3]

The same testing as in Example 1 was repeated except that 20 parts by weight of an epoxy resin shown in the following Table 1 was added instead of the epoxy resin in Example 1 and the non-halogen flame retardant compound was not added.

### [Comparative Example 4]

The same testing as in Example 1 was repeated except that 20 parts by weight of an epoxy resin shown in the following Table 1 was added instead of the epoxy resin in Example 1 and the non-halogen flame retardant compound was not added.

### [Comparative Example 5]

The same testing as in Example 1 was repeated except that 20 parts by weight of an epoxy resin shown in the following Table 1 was added instead of the epoxy resin in Example 1 and the non-halogen flame retardant compound was not added.

### [Comparative Example 6]

The same testing as in Example 1 was repeated except that the epoxy resin of Example 1 was not added and 20 parts by weight of the non-halogen flame retardant compound was added.

### [Test Example]

External candle flame ignition flame retardancy of flame retardant composition samples prepared in Examples 1 to 9 and Comparative Examples 1 to 6 was measured in accordance with IEC TS 62441 and the results are shown in Table 1 below.

Specifically, so as to measure the external candle flame ignition flame retardancy, simulation testing of a candle having a diameter of 20 mm and having a length of 150 mm was performed according to the following procedure.

Sample pre-treatment (conditioning) - Candle flame testing was performed in a laboratory at 15 to 35°C and at a relative humidity of 45 to 75% within one hour after pre-treatment in a chamber at 23±2°C and at a relative humidity of 50±5% for at least 24 hours.

Ignition Source - Needle burner and 12 mm test flame according to IEC 60695-11-5 were used.

Flame durability testing - a tip of a burner was placed at a position of 5 ± 0.5 mm from a candle flame accessible area (10 mm above and 150 mm below from a support surface), a horizontal axis of the burner tip was maintained within ± 5 degrees and a central line of the burner tip was present within the candle flame accessible area. Although the material shrank and melted, a burner flame was maintained for three minutes and then removed. At this time, PASS was defined if the flame was extinguished within three minutes and FAIL was defined, if not.

The test results are shown in the following Tables 1 and 2.

**TABLE 1**

| Items | | Examples | | | | | | | | |
|---|---|---|---|---|---|---|---|---|---|---|
| | | 1 | 2 | 3 | 4 | 5 | 6 | 7 | 8 | 9 |
| Emulsion-polymerized ABS | | 25 | 25 | 25 | 25 | 25 | 25 | 25 | 25 | 25 |
| SAN | | 75 | 75 | 25 | 75 | 75 | 75 | 75 | 75 | 75 |
| Epoxy resin | First epoxy resin* | | 10 | | | 1 | | | 8 | 2.5 |
| | Second epoxy resin ** | 10 | | | | 8 | 5 | 7 | 1 | 2.5 |
| | Third epoxy resin *** | | | 10 | 0 | 1 | | | | 2.5 |
| | Fourth epoxy resin*** * | | | | 10 | | 5 | 3 | 1 | 2.5 |
| Non-halogen flame retardant compound | | 10 | 10 | 10 | 10 | 10 | 10 | 10 | 10 | 10 |
| External Candle Flame Ignition (IEC TS 62441 standard) | | PASS | PASS | PASS | PASS | PASS | PASS | PASS | PASS | PASS |

| | | | | | | | | | | |
|---|---|---|---|---|---|---|---|---|---|---|
| *: resin of Formula 1, wherein n1, n2 and n3 are 0, and n4 is an integer of 1 to 100 and the end groups are 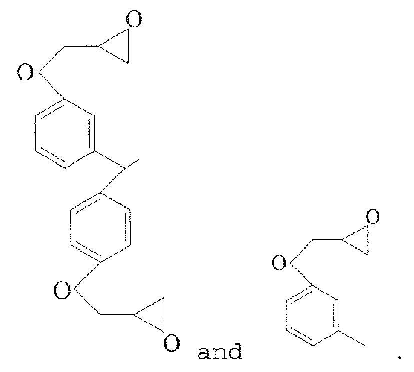 **: resin of Formula 1, wherein X is -OCH₂CH₂O-, Y is-(C₆H₄)-CH₂-(C₆H₄)-, n3 and n4 are 0, and n1 and n2 each independently an integer of 1 to 100. ***: resin of Formula 1, wherein Z is (OC₆H₄)₂CHCH (C₆H₄O)₂, n1, n2 and n4 are 0, and n3 is 1. **** resin of Formula 1, wherein n1 is 1, R1 is -CH₃, and n2, n3 and n4 are 0. | | | | | | | | | | |

**TALBE 2**

| Items | | Comparative Examples | | | | | |
|---|---|---|---|---|---|---|---|
| | | 1 | 2 | 3 | 4 | 5 | 6 |
| Emulsion polymerized ABS | | 25 | 25 | 25 | 25 | 25 | 25 |
| SAN | | 75 | 75 | 75 | 75 | 75 | 75 |
| | First epoxy resin * | | | 20 | | | |
| Epoxy resin | Second epoxy resin ** | | 20 | | | | |
| | Third epoxy resin *** | | | | 20 | | |
| | Fourth epoxy resin **** | | | | | 20 | |
| Non-halogen flame retardant compound | | - | - | - | - | - | 20 |
| External Candle Flame Ignition (IEC TS 62441 standard) | | FAIL | FAIL | FAIL | FAIL | FAIL | FAIL |

| | | | | | | | |
|---|---|---|---|---|---|---|---|
| *: resin of Formula 1, wherein n1, n2 and n3 are 0, and n4 is an integer of 1 to 100 and the end groups are 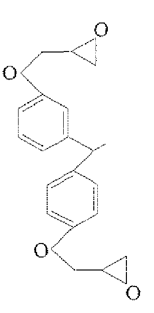 and 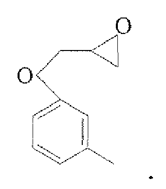 **: resin of Formula 1, wherein X is -OCH₂CH₂O-, Y is-(C₆H₄)-CH₂-(C₆H₄)-, n3 and n4 are 0, and n1 and n2 each independently an integer of 1 to 100. ***: resin of Formula 1, wherein Z is (OC₆H₄)₂CHCH(C₆H₄O)₂, n1, n2 and n4 are 0, and n3 is 1. **** resin of Formula 1, wherein n1 is 1, R1 is -CH₃, and n2, n3 and n4 are 0. | | | | | | | |

As can be seen from Table 1 above, Examples 1 to 9 in which both the epoxy resin and the phosphorous-based flame retardant were added passed the flame retardancy standard of external candle flame ignition.

As can be seen from Table 2, it can be seen that Comparative Example 1 in which neither an epoxy resin nor a phosphorous-based flame retardant was added, and Comparative Examples 2, 3, 4 and 5 in which either an epoxy resin or a phosphorous-based flame retardant was added did not pass the external candle flame ignition standard.

In particular, flame retardant samples of Comparative Examples 1, 2, 3, 4 and 5 were completely destroyed by fire since they did not contain a non-halogen flame retardant compound, and the sample of Comparative Example 6 was slightly ignited owing to the effect of the non-halogen flame retardant compound, but was holed due to non-generation of char and was extinguished lately or was completely destroyed by fire.

As apparent from the above description, the present invention provides a flame retardant for a styrene resin without using an excess of non-halogen flame retardant compound and the flame retardant satisfies external candle flame ignition which is a certification standard for flame retardancy.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A flame retardant for a styrene resin comprising:
a non-halogen flame retardant compound; and
an epoxy resin having a repeat unit represented by the following Formula 1: 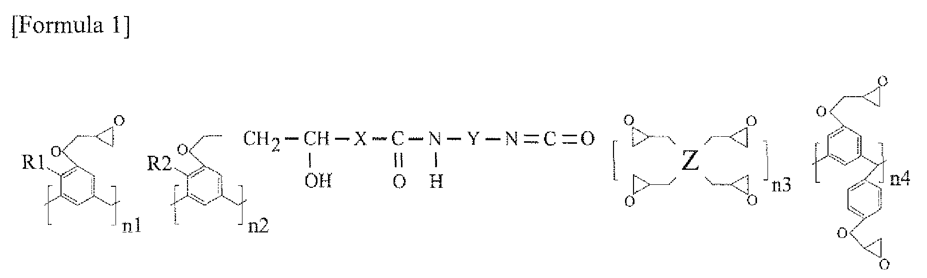
wherein R1 and R2 each independently represent a hydrogen atom, C1-C20 alkyl, C5-C24 aryl or C6-C30 alkylaryl,
X and Y each independently represent a hydrogen atom, unsubstituted or oxygen- or nitrogen-substituted C1-C20 alkyl, unsubstituted or oxygen- or nitrogen-substituted C5-C24 aryl, or unsubstituted or oxygen- or nitrogen-substituted C6-C30 alkylaryl,
Z represents unsubstituted or oxygen- or nitrogen-substituted C1-C20 tertiary alkyl, unsubstituted or oxygen- or nitrogen-substituted C5-C24 tertiary aryl, or unsubstituted or oxygen- or nitrogen-substituted C6-C30 tertiary alkylaryl,
n1, n2, n3, and n4 each independently represent an integer of 0 to 100, n1, n2, n3, and n4 cannot be zero at the same time, and
wherein the epoxy resin is an epoxy resin of Formula 1 wherein n3 and n4 are 0 and n1 and n2 are each independently an integer of 1 to 100.

2. The flame retardant according to claim 1, wherein the non-halogen flame retardant compound comprises at least one selected from the group consisting of a (di)phosphate compound, a polyphosphate compound having three or more phosphate groups, a phosphonate compound and a phosphinate compound.

3. The flame retardant according to claim 1, wherein the epoxy resin comprises a combination of an epoxy resin of Formula 1 wherein n3 and n4 are 0, and n1 and n2 are each independently an integer of 1 to 100 and an epoxy resin selected from an epoxy resin of Formula 1 wherein n1, n2 and n3 are 0 and n4 is an integer of 1 to 100, a resin of Formula 1 wherein n1 n2 and n4 are 0 and n3 is 1, and a resin of Formula 1, wherein n1 is 1, R1 is -CH₃, and n2, n3 and n4 are 0, and a mix ratio of the two resins is determined such that a rate of each resin in the mix ratio ranges from 1 to 9.

4. The flame retardant according to claim 1, wherein the epoxy resin comprises a combination of an epoxy resin of Formula 1 wherein n3 and n4 are 0, and n1 and n2 are each independently an integer of 1 to 100 and two epoxy resins selected from an epoxy resin of Formula 1 wherein n1, n2 and n3 are 0 and n4 is an integer of 1 to 100, a resin of Formula 1 wherein n1, n2 and n4 are 0, and n3 is 1, and a resin of Formula 1, wherein n1 is 1, R1 is -CH₃, and n2, n3 and n4 are 0, and a mix ratio of the three resins is determined such that a rate of each resin in the mix ratio ranges from 1 to 8.

5. The flame retardant according to claim 1, wherein the epoxy resin comprises a combination of four resins comprising an epoxy resin of Formula 1 wherein n1, n2 and n3 are 0 and n4 is an integer of 1 to 100, an epoxy resin of Formula 1 wherein n3 and n4 are 0, and n1 and n2 are each independently an integer of 1 to 100, a resin of Formula 1 wherein n1, n2 and n4 are 0, and n3 is 1, and a resin of Formula 1, wherein n1 is 1, R₁ is -CH₃, and n2, n3 and n4 are 0, and a mix ratio of the four resins is determined such that a rate of each resin in the mix ratio ranges from 1 to 7.

6. The flame retardant according to claim 1, wherein the flame retardant passes the IEC TS 62441 flame retardant standard of external candle flame ignition.

7. A flame retardant composition comprising 2 to 60 parts by weight of the flame retardant according to any one of claims 1 to 14, based on 100 parts by weight of a styrene resin, wherein a content of an epoxy resin is 1 to 30 parts by weight.

8. The flame retardant composition according to claim 7, wherein the styrene resin comprises an acrylonitrile-butadiene-styrene (ABS) copolymer, a styrene-acrylonitrile (SAN) copolymer, a polystyrene (PS) copolymer, a high-impact polystyrene(HIPS) copolymer or a combination thereof.

9. The flame retardant composition according to claim 8, wherein the styrene resin comprises:
10 to 90% by weight of a rubber-reinforced ABS resin prepared by emulsion graft polymerization such that the ABS resin comprises 50 to 70% by weight of a butadiene rubber based on the total weight of the ABS resin; and
90 to 10% by weight of a styrene-acrylonitrile copolymer.

10. The flame retardant composition according to claim 9, wherein the styrene-acrylonitrile copolymer has a weight average molecular weight of 50,000 to 150,000 and comprises 20 to 40% by weight of an acrylonitrile monomer.

11. The flame retardant composition according to claim 7, wherein the flame retardant composition passes the IEC TS 62441 flame retardant standard of external candle flame ignition.

12. The flame retardant composition, according to claim 7, further comprising one or more additives selected from the group consisting of an impact resistance modifier, a heat stabilizer, an antidropping agent, an antioxidant, a photostabilizer, a UV blocker, a pigment and an inorganic filler, in an amount of 0.1 to 50 parts by weight, with respect to 100 parts by weight of the styrene resin.

## Patentansprüche

1. Flammschutzmittel für ein Styrolharz, welches umfasst:
eine halogenfreie Flammschutzverbindung; und
ein Epoxyharz mit einer Wiederholungseinheit dargestellt durch die folgende Formel 1: 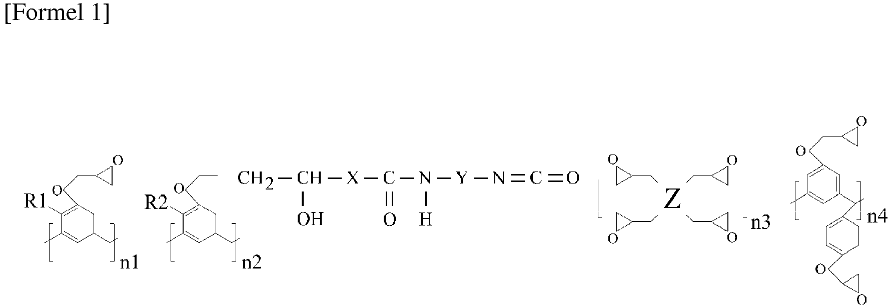
wobei R1 und R2 jeweils unabhängig ein Wasserstoffatom, C1-C20-Alkyl, C5-C24-Aryl oder C6-C30-Alkylaryl darstellen,
X und Y jeweils unabhängig ein Wasserstoffatom, unsubstituiertes oder Sauerstoff- oder Stickstoff-substituiertes C1-C20-Alkyl, unsubstituiertes oder Sauerstoff- oder Stickstoff-substituiertes C5-C24-Aryl oder unsubstituiertes oder Sauerstoff- oder Stickstoff-substituiertes C6-C30-Alkylaryl darstellen,
Z unsubstituiertes oder Sauerstoff- oder Stickstoff-substituiertes C1-C20-tertiär-Alkyl, unsubstituiertes oder Sauerstoff- oder Stickstoff-substituiertes C5-C24-tertiär-Aryl oder unsubstituiertes oder Sauerstoff- oder Stickstoff-substituiertes C6-C30-tertiär-Alkylaryl darstellen,
n1, n2, n3 und n4 jeweils unabhängig eine ganze Zahl von 0 bis 100 darstellen, wobei n1, n2, n3 und n4 nicht gleichzeitig Null sein können, und
wobei das Epoxyharz ein Epoxyharz der Formel 1 ist, wobei n3 und n4 0 sind und n1 und n2 jeweils unabhängig eine ganze Zahl von 1 bis 100 sind.

2. Flammschutzmittel nach Anspruch 1, wobei die halogenfreie Flammschutzverbindung wenigstens eine umfasst, die ausgewählt ist aus der Gruppe bestehend aus einer (Di)phosphatverbindung, einer Polyphosphatverbindung mit drei oder mehr Phosphatgruppen, einer Phosphonatverbindung und einer Phosphinatverbindung.

3. Flammschutzmittel nach Anspruch 1, wobei das Epoxyharz eine Kombination eines Epoxyharzes der Formel 1, wobei n3 und n4 0 sind und n1 und 2 jeweils unabhängig eine ganze Zahl von 1 bis 100 sind, und eines Epoxyharzes ausgewählt aus einem Epoxyharz der Formel 1, wobei n1, n2 und n3 0 sind und n4 eine ganze Zahl von 1 bis 100 ist, einem Harz der Formel 1, wobei n1, n2 und n4 0 sind und n3 1 ist, und einem Harz der Formel 1, wobei n1 1 ist, R1 -CH₃ ist und n2, n3 und n4 0 sind, und wobei ein Mischungsverhältnis der zwei Harze so bestimmt ist, dass eine Rate jedes Harzes in dem Mischungsverhältnis von 1 bis 9 reicht.

4. Flammschutzmittel nach Anspruch 1, wobei das Epoxyharz eine Kombination eines Epoxyharzes der Formel 1, wobei n3 und n4 0 sind und n1 und n2 jeweils unabhängig eine ganze Zahl von 1 bis 100 sind, und zwei Epoxyharzen umfasst, die ausgewählt sind aus einem Epoxyharz der Formel 1, wobei n1, n2 und n3 0 sind und n4 eine ganze Zahl von 1 bis 100 ist, einem Harz der Formel 1, wobei n1, n2 und n4 0 sind und n3 1 ist, und einem Harz der Formel 1, wobei n1 1 ist, R1 -CH₃ ist und n2, n3 und n4 0 sind, und wobei ein Mischungsverhältnis der drei Harze so bestimmt ist, dass eine Rate jedes Harzes in dem Mischungsverhältnis von 1 bis 8 reicht.

5. Flammschutzmittel nach Anspruch 1, wobei das Epoxyharz eine Kombination aus vier Harzen umfasst, umfassend ein Epoxyharz der Formel 1, wobei n1, n2 und n3 0 sind und n4 eine ganze Zahl von 1 bis 100 ist, ein Epoxyharz der Formel 1, wobei n3 und n4 0 sind und n1 und n2 jeweils unabhängig eine ganze Zahl von 1 bis 100 sind, ein Harz der Formel 1, wobei n1, n2 und n4 0 sind und n3 1 ist, und ein Harz der Formel 1, wobei n1 1 ist, R1 -CH₃ ist und n2, n3 und n4 0 sind, und wobei ein Mischungsverhältnis der vier Harze so bestimmt ist, dass eine Rate jedes Harzes in dem Mischungsverhältnis von 1 bis 7 reicht.

6. Flammschutzmittel nach Anspruch 1, wobei das Flammschutzmittel den IEC TS 62441-Flammschutzstandard für eine Flammentzündung durch externe Kerze passiert.

7. Flammschutzmittelzusammensetzung umfassend 2 bis 60 Gewichtsteile des Flammschutzmittels nach einem der Ansprüche 1 bis 6, basierend auf 100 Gewichtsteilen eines Styrolharzes, wobei ein Gehalt eines Epoxyharzes 1 bis 30 Gewichtsteile ist.

8. Flammschutzmittelzusammensetzung nach Anspruch 7, wobei das Styrolharz ein Acrylnitril-Butadien-Styrol-Copolymer (ABS), ein Styrol-Acrylnitril-Copolymer (SAN), ein Polystyrolcopolymer (PS), ein hochschlagzähes Polystyrolcopolymer (HIPS) oder eine Kombination derselben umfasst.

9. Flammschutzmittelzusammensetzung nach Anspruch 8, wobei das Styrolharz umfasst:
10 bis 90 Gew.-% eines Kautschuk-verstärkten ABS-Harzes, hergestellt durch Emulsionspfropfpolymerisation, so dass das ABS-Harz 50 bis 70 Gew.-% eines Butadienkautschuks, basierend auf dem Gesamtgewicht des ABS-Harzes, umfasst; und
90 bis 10 Gew.-% eines Styrol-Acrylnitril-Copolymers.

10. Flammschutzmittelzusammensetzung nach Anspruch 9, wobei das Styrol-Acrylnitril-Copolymer ein Gewichtsmittelmolekulargewicht von 50.000 bis 150.000 aufweist und 20 bis 40 Gew.-% eines Acrylnitril-Monomers umfasst.

11. Flammschutzmittelzusammensetzung nach Anspruch 7, wobei die Flammschutzmittelzusammensetzung den IEC TS 62441-Flammschutzmittelstandard für eine Flammentzündung durch externe Kerze passiert.

12. Flammschutzmittelzusammensetzung nach Anspruch 7, weiter umfassend ein oder mehrere Additive ausgewählt aus der Gruppe bestehend aus einem Schlagzähmodifizierer, einem Wärmestabilisator, einem Antitropfmittel, einem Antioxidationsmittel, einem Photostabilisator, einem UV-Blocker, einem Pigment und einem anorganischen Füllstoff, in einer Menge von 0,1 bis 50 Gewichtsteilen, in Bezug auf 100 Gewichtsteile des Styrolharzes.

## Revendications

1. Un retardateur de flamme for une résine de styrène comprenant :
un composé retardateur de flamme sans halogène ; et
une résine époxy ayant une unité de répétition représentée par la Formule 1 suivante : 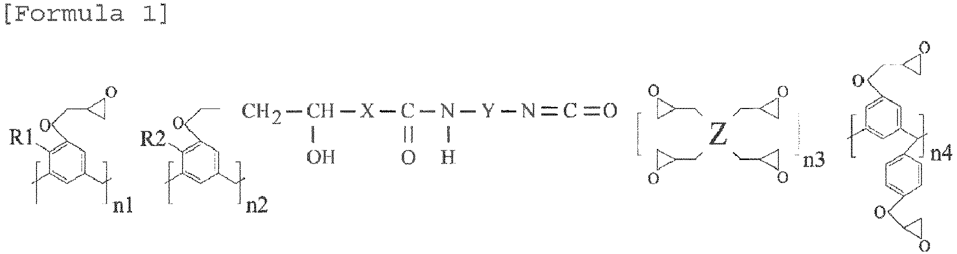
où R1 et R2 chacun indépendamment représentent un atome d'hydrogène, un alkyle en C1-C20, un aryle en C5-C24 ou un alkylaryle en C6-C30,
X et Y chacun indépendamment représentent un atome d'hydrogène, un alkyle en C1-C20 non substitué ou substitué par un oxygène ou un azote, un aryle en C5-C24 non substitué ou substitué par un oxygène ou un azote, ou un alkylaryle en C6-C30 non substitué ou substitué par un oxygène ou un azote,
Z représente un alkyle tertiaire en C1-C20 non substitué ou substitué par un oxygène ou un azote, un aryle tertiaire en C5-C24 non substitué ou substitué par un oxygène ou un azote, ou un alkylaryle tertiaire en C6-C30 non substitué ou substitué par un oxygène ou un azote,
n1, n2, n3 et n4 chacun indépendamment représentent un nombre entier compris entre 0 et 100, n1, n2, n3 et n4 ne peuvent pas être zéro en même temps, et
où la résine époxy est une résine époxy de la Formule 1 où n3 et n4 sont 0 et n1 et n2 sont chacun indépendamment un nombre entier compris entre 1 et 100.

2. Le retardateur de flamme selon la revendication 1, où le composé retardateur de flamme sans halogène comprend un ou plusieurs composés sélectionnés dans le groupe constitué par un composé de (di)phosphate, un composé de polyphosphate ayant trois ou plus de trois groupes de phosphate, un composé de phosphonate et un composé de phosphinate.

3. Le retardateur de flamme selon la revendication 1, où la résine époxy comprend une combinaison d'une résine époxy de la Formule 1 où n3 et n4 sont 0, et n1 et n2 sont chacun indépendamment un nombre entier compris entre 1 et 100, et une résine époxy sélectionnée parmi une résine époxy de la Formule 1 où n1, n2 et n3 sont 0 et n4 est un nombre entier compris entre 1 et 100, une résine de la Formule 1 où n1, n2 et n4 sont 0 et n3 est 1, et une résine de la Formule 1, où n1 est 1, R1 est -CH₃, et n2, n3 et n4 sont 0, et le rapport de mélange des deux résines est déterminé de telle sorte que le taux de chaque résine dans le mélange est compris entre 1 et 9.

4. Le retardateur de flamme selon la revendication 1, où la résine époxy comprend une combinaison d'une résine époxy de la Formule 1 où n3 et n4 sont 0, et n1 et n2 sont chacun indépendamment un nombre entier compris entre 1 et 100, et deux résines époxy sélectionnées parmi une résine époxy de la Formule 1 où n1, n2 et n3 sont 0 et n4 est un nombre entier compris entre 1 et 100, une résine de la Formule 1 où n1, n2 et n4 sont 0, et n3 est 1, et une résine de la Formule 1 où n1 est 1, R1 est -CH₃, et n2, n3 et n4 sont 0, et le rapport de mélange des trois résines est déterminé de telle sorte que le taux de chaque résine dans le mélange est compris entre 1 et 8.

5. Le retardateur de flamme selon la revendication 1, où la résine époxy comprend une combinaison de quatre résines comprenant une résine époxy de la Formule 1 où n1, n2 et n3 sont 0 et n4 est un nombre entier compris entre 1 et 100, une résine époxy de la Formule 1 où n3 et n4 sont 0, et n1 et n2 sont chacun indépendamment un nombre entier compris entre 1 et 100, une résine de la Formule 1 où n1, n2 et n4 sont 0, et n3 est 1, et une résine de la Formule 1, où n1 est 1, R1 est -CH₃, et n2, n3 et n4 sont 0, et le rapport de mélange des quatre résines est déterminé de telle sorte que le taux de chaque résine dans le mélange est compris entre 1 et 7.

6. Le retardateur de flamme selon la revendication 1, où le retardateur de flamme satisfait à la norme CEI TS 62441 des retardateurs dune flamme due à l'embrasement externe d'une flamme de bougie.

7. Une composition de retardateur de flamme comprenant entre 2 et 60 parties en poids du retardateur de flamme selon l'une quelconque des revendications 1 et 14, sur la base de 100 parties en poids d'une résine de styrène, où la teneur en résine époxy est comprise entre 1 et 30 parties en poids.

8. La composition de retardateur de flamme selon la revendication 7, où la résine de styrène comprend un copolymère d'acrylonitrile-butadiène-styrène (ABS), un copolymère de styrène-acrylonitrile (SAN), un copolymère de polystyrène (PS), un copolymère de polystyrène choc (HIPS) ou une combinaison de ceux-ci.

9. La composition de retardateur de flamme selon la revendication 8, où la résine de styrène comprend :
entre 10 et 90 % en poids d'une résine ABS renforcée de caoutchouc préparée par polymérisation par greffage en émulsion de sorte que la résine ABS comprend entre 50 et 70 % en poids d'un caoutchouc butadiène basé sur le poids total de la résine ABS ; et
entre 90 et 10 % en poids d'un copolymère styrène-acrylonitrile.

10. La composition de retardateur de flamme selon la revendication 9, où le copolymère styrène-acrylonitrile a un poids moléculaire moyen en poids compris entre 50 000 et 150 000 et comprend entre 20 et 40 % en poids d'un monomère d'acrylonitrile.

11. La composition de retardateur de flamme selon la revendication 7, où la composition de retardateur de flamme satisfait à la norme CEI TS 62441 des retardateurs d'une flamme due à l'embrasement externe d'une flamme de bougie.

12. La composition de retardateur de flamme selon la revendication 7, comprenant en outre un ou plusieurs additifs sélectionnés dans le groupe constitué par un agent de modification de la résistance au choc, un stabilisant thermique, un agent antigoutte, un antioxydant, un photostabilisant, un filtre anti-UV, un pigment et une charge inorganique, dans une quantité comprise entre 0,1 et 50 parties en poids, par rapport à 100 parties en poids de la résine de styrène.
